(19) **Europäisches Patentamt**

**European Patent Office**

**Office européen des brevets**

(11) **EP 1 085 714 B1**

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(51) Int Cl.[7]: **H04L 27/26**

(21) Anmeldenummer: **00118378.9**

(22) Anmeldetag: **24.08.2000**

(54) **Differentielle Demodulation in zwei Dimensionen**

Differential demodulation in two dimensions

Démodulation différentielle dans deux dimensions

(84) Benannte Vertragsstaaten:
**AT BE CH CY DE DK ES FI FR GB GR IE IT LI LU MC NL PT SE**

(30) Priorität: **13.09.1999 DE 19943855**

(43) Veröffentlichungstag der Anmeldung:
**21.03.2001 Patentblatt 2001/12**

(73) Patentinhaber: **Deutsches Zentrum für Luft- und Raumfahrt e.V.**
**53175 Bonn (DE)**

(72) Erfinder:
• **Haas, Erik, Dipl.-Ing.**
 **81841 München (DE)**
• **Kaiser, Stefan, Dr.**
 **82205 Gilching (DE)**

(74) Vertreter: **von Kirschbaum, Albrecht, Dipl.-Ing.**
 **Patentanwalt,**
 **Postfach 15 20**
 **82102 Germering (DE)**

(56) Entgegenhaltungen:
**EP-A- 0 736 986    EP-A- 0 752 779**
**EP-A- 0 913 972**

EP 1 085 714 B1

**Beschreibung**

Die Erfindung betrifft ein Verfahren zur empfangsseitig in zwei Dimensionen, nämlich in Zeit- und Frequenzrichtung, durchgeführten differentiellen Demodulation der Phase der empfangenen Symbole von digital in Form einer differentiellen Phasenmodulation in einem mit dem OFDM-Mehrträgerverfahren arbeitenden Übertragungssystem übertragenen Signalen.

Bei der digitalen Signalübermittlung über ein drahtloses oder leitungsgebundenes System werden entweder kohärente Übertragungsverfahren mit pilotsymbolgestützter Kanalschätzung oder sogenannte differentielle Übertragungsverfahren verwendet. Bei den kohärenten Verfahren muß aufgrund der zur Kanalschätzung zu verwendenden Pilotsymbole z.B. in Form von Trainingssequenzen ein zusätzlicher Mehraufwand betrieben werden. Bei den differentiellen Verfahren dagegen wird versucht, ohne Pilotsymbole auszukommen, indem bei der Demodulation statt dessen ein bereits zuvor empfangenes Symbol als Referenzwert verwendet wird.

Bei den derzeit bekannten differentiellen Übertragungssystemen wird gewöhnlich eine eindimensionale Modulation/Demodulation eingesetzt. Bei Übertragungsverfahren, die mit einem einzigen Träger arbeiten, wird hierbei das zeitlich vorausgegangene Symbol als differentieller Referenzwert verwendet. Bei Mehrträger-Übertragungsverfahren, wie beispielsweise OFDM (Orthogonal Frequency Division Multiplexing), wird entweder das zeitlich vorausgegangene Mehrträger-OFDM-Symbol als differentieller Referenzwert für die jeweiligen Unterträger verwendet oder das Symbol auf einem Nachbarunterträger als differentieller Referenzwert herangezogen.

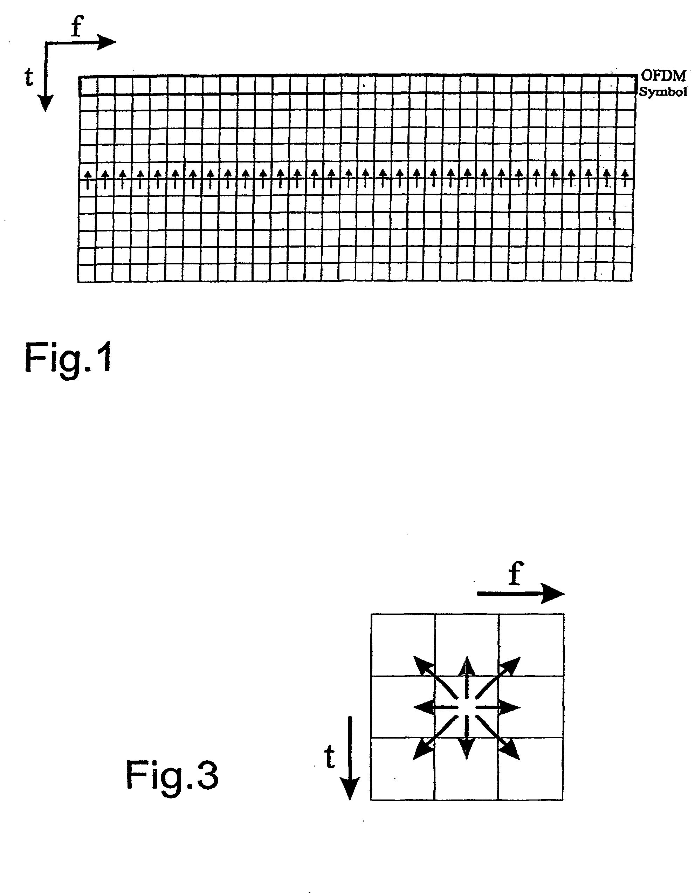

Die erste dieser beiden Möglichkeiten, die sich als differentielle Modulation/Demodulation in Zeitrichtung bezeichnen läßt, ist in der beigefügten Fig.1 schematisch dargestellt. Die einzelnen Unterträger sind entlang der Frequenzachse f aufgetragen. Die Zeitschritte sind fortschreitend entlang der Zeitachse t von oben nach unten aufgetragen. Als Beispiel ist in der obersten Frequenzzeile ein vollständiges OFDM-Symbol dargestellt, das aus empfangenen Symbolen der einzelnen Unterträger besteht. Die Richtung der Pfeile deutet in der Fig.1 die Richtung eines Empfangssymbols jeweils zum zugeordneten Bezugssymbol an, das also in der Zeitrichtung. davor liegt. Die zweite der genannten Möglichkeiten läßt sich als differentielle Modulation/Demodulation in Frequenzrichtung bezeichnen.

Die differentielle Modulation/Demodulation kommt heute bereits im europäischen terrestrischen digitalen Hörfunkstandard DAB (Digital Audio Broadcasting) zum Einsatz. Der DAB-Standard verwendet das OFDM-Verfahren mit einer eindimensionalen differentiellen Modulation/Demodulation auf Unterträgerbasis in Zeitrichtung.

Die kohärente Mehrträger-Modulation/Demodulation (OFDM) mit pilotsymbolgestützter Kanalschätzung kommt im europäischen terrestrischen digitalen Fernsehstandard DVB (Digital Video Broadcasting) zum Einsatz. Hierbei wird auch daran gedacht, im Empfänger eine zweidimensionale Kanalschätzung einzusetzen.

Zusammenfassend lassen sich die beiden bestehenden Übertragungsmethoden dadurch charakterisieren, dass kohärente Verfahren mit pilotsymbolgestützter ein- bzw. zweidimensionaler Kanalschätzung arbeiten und differentielle Verfahren mit eindimensionaler Modulation/Demodulation entweder in Zeit- oder in Frequenzrichtung betrieben werden.

Bei beiden beschriebenen bekannten Verfahren zur digitalen Übertragung bestehen jedoch erhebliche Nachteile.

So erfordert die kohärente Demodulation eine Kanalschätzung, die unter realen Bedingungen nicht perfekt durchgeführt werden kann und daher zu Fehlern in der Schätzung und damit bei der Signaldemodulation führt. Die dabei notwendigen Pilotsymbole bedeuten einen zusätzlichen Aufwand und einen Verlust in der Bandbreiteneffizienz. Die für kohärente Verfahren notwendige Kanalschätzung führt darüber hinaus zu einer beträchtlichen Erhöhung der Komplexität in den Empfängern eines solchen Übertragungssystems.

Aus EP-A-0913972 und EP-A-0752779 ist jeweils ein Verfahren zur empfangsseitig durchgeführten differentiellen Demodulation von digital in Form einer differentiellen Modulation in einem Übertragungssystem übertragenen Signalen bekannt, wobei die differentielle Demodulation der empfangenen Symbole nicht nur in einer Dimension, sondern in zwei Dimensionen und zwar in Zeit- und Frequenzrichtung abgewickelt wird. Dabei wird als Übertragungsverfahren das OFDM-Mehrträgerverfahren verwendet, und als differentielle Modulation ist eine Phasenmodulation vorgesehen.

Im Vergleich zur kohärenten pilotsymbolgestützten Demodulation sind die bisher verwendeten ein- und zweidimensionalen differentiellen Demodulationsweisen in der Fehlerwahrscheinlichkeit schlechter, da eine bedingte Fehlerfortpflanzung durch das dort verwendete einfache differentielle Verfahren erfolgt.

Der Erfindung liegt die Aufgabe zugrunde, für die digitale Übertragung der Signale über ein drahtloses oder leitungsgebundenes System, das eine differentielle Modulation verwendet, ein Demodulationsverfahren zu schaffen, das möglichst robust gegen die während der Übertragung auftretenden Störungen ist und das darüber hinaus noch so ausgebildet ist, dass mögliche Übertragungsfehler bei der Demodulation erkannt und behoben werden können. Dabei soll die Komplexität des Verfahrens bei maximaler Effizienz möglichst gering sein.

Gemäß der Erfindung, die sich auf ein Verfahren der eingangs genannten Art bezieht, wird diese Aufgabe dadurch gelöst, dass die differentielle Demodulation der Phase der empfangenen OFDM-Symbole in jedem Schritt mit jeweils acht richtungsmäßig benachbarten empfangenen Symbolen durchgeführt wird, wobei sich die Anzahl der richtungsmäßig benachbarten Symbole dann verringert, wenn sich das Ausgangssymbol am Rande eines OFDM-Rahmens befindet, in dem zeitlich aufeinanderfolgend mehrere OFDM-Symbole zusammengefügt sind, dass im ersten Schritt die Demodulationsrichtung der Richtung der ursprünglichen eindimensionalen differentiellen Demodulation des Ausgangssymbols zum Bezugssymbol entspricht und die weiteren sieben Richtungsmöglichkeiten nicht direkt, sondern über einen oder mehrere weitere Iterationsschritte zum Bezugssymbole führen, dass mit Hilfe eines festgelegten Kriteriums im OFDM-Rahmen ein Demodulationspfad gesucht und gefunden wird, der zwar länger als der gewöhnliche eindimensionale Pfad ist, aber laut dem Kriterium zuverlässiger ist, und dass als Entscheidungsgröße für das Kriterium des optimalen Pfades der Phasenfehler der einzelnen Schritte verwendet wird, wobei zu Beginn der Betrag des Phasenfehlers des direkten Pfades ermittelt wird, der als Referenzwert dient, dass danach alle Pfade bis zur maximalen Iterationslänge, die zum Bezugssymbol führen, untersucht werden und für jeden Zwischenschritt des gerade zu untersuchenden Alternativpfades der Phasenfehler ermittelt wird, dass dann, wenn einer dieser Phasenfehler betragsmäßig größer als der Referenzwert ist, dieser Alternativpfad verworfen wird, dass jedoch dann, wenn alle Phasenfehler im Alternativpfad kleiner als der Referenzwert sind, der maximale Phasenfehler hieraus zum neuen Referenzwert und der untersuchte Pfad zum neuen optimalen Pfad wird, dass nach Untersuchung aller möglichen Pfade die differentielle Gesamtphase des optimalen Pfades als Entscheidungsgröße für das differentiell zu demodulierende Symbol verwendet wird und dass auf diese Weise im OFDM-Rahmen zum Schluß für jedes differentiell zu demodulierende Symbol ein optimaler Pfad zur Entscheidungsfindung zur Verfügung gestellt wird. Das Demodulationsverfahren nach der Erfindung ist sehr robust gegenüber Fehlern, so dass die Leistungseffizienz des Übertragungssystems erhöht wird. Darüber hinaus kann bei Anwendung des Verfahrens nach der Erfindung eine Kanalschätzung für die Demodulation entfallen.

Die differentielle Demodulation wird beim Empfang von digital in Form einer differentiellen Modulation mittels des OFDM-Mehrträgerverfahrens übertragenen Signalen vorgenommen, wobei die Information der einzelnen Träger in einem sogenannten OFDM-Symbol enthalten ist und zeitlich aufeinanderfolgend mehrere dieser OFDM-Symbole zu einer Rahmenstruktur wählbarer Länge zusammengefügt sind. Die differentielle Demodulation der empfangenen Symbole wird sowohl in der Richtung der Zeit als auch in der Richtung der Frequenz, also nicht nur in einer Dimension, sondern in zwei Dimensionen abgewickelt.

Die differentielle Demodulation wird in jedem Schritt mit den jeweils acht richtungsmäßig benachbarten empfangenen Symbolen durchgeführt, wobei sich die Anzahl der richtungsmäßig benachbarten Symbole dann verringert, wenn sich das Ausgangssymbol am Rande eines Rahmens befindet.

Eine der acht Richtungsmöglichkeiten des ersten Schrittes stellt die Richtung der ursprünglichen eindimensionalen differentiellen Demodulation des Ausgangssymbols zum Bezugssymbol dar, das durch die Richtung der sendeseitig aufgebrachten differentiellen Modulation bestimmt ist. Die weiteren sieben Richtungsmöglichkeiten führen nicht direkt, sondern über einen oder mehrere weitere differentielle Iterationsschritte zum Bezugssymbol, wobei mit Hilfe des festgelegten Kriteriums versucht wird, einen Demodulationspfad im Rahmen zu finden, der zwar länger als der gewöhnliche eindimensionale Pfad ist, aber laut dem Kriterium zuverlässiger ist.

Die digitale Information liegt bei der beim Verfahren nach der Erfindung verwendeten differentiellen Modulation in der differentiellen Phase, die als Entscheidungsgröße für das Kriterium des optimalen Pfades der Phasenfehler der einzelnen Schritte verwendet wird, wobei zu Beginn der Betrag des Phasenfehlers des direkten Pfades ermittelt wird, der als Referenzwert dient. Danach werden alle Pfade bis zur maximalen Iterationslänge, die zum Bezugssymbol führen, untersucht und es wird für jeden Zwischenschritt des gerade zu untersuchenden Alternativpfades der Phasenfehler ermittelt. Wenn einer dieser Phasenfehler betragsmäßig größer als der Referenzwert ist, wird dann dieser Alternativpfad verworfen.

Jedoch dann, wenn alle Phasenfehler im Alternativpfad kleiner als der Referenzwert sind, wird der maximale Phasenfehler hieraus zum neuen Referenzwert und der untersuchte Pfad zum neuen optimalen Pfad. Nach Untersuchung aller möglichen Pfade wird die differentielle Gesamtphase des optimalen Pfades als Entscheidungsgröße für das differentiell zu demodulierende Symbol verwendet. Auf diese Weise wird im OFDM-Rahmen zum Schluß für jedes differentiell zu demodulierende Symbol ein optimaler Pfad zur Entscheidungsfindung zur Verfügung gestellt.

Als differentielle Modulationsart kann u.a. in vorteilhafter Weise die DQPSK(Differential Quaternary Phase Shift Keying)-Modulation verwendet werden, die z.B. auch beim bestehenden DAB(Digital Audio Broadcasting)-System eingesetzt wird.

Das erfindungsgemäße Verfahren kann vorteilhaft eine Anwendung in Empfängern für bereits existierende digitale Übertragungssysteme mit eindimensionaler Modulation finden. Eine Anwendungsmöglichkeit besteht dabei z. B. beim bestehenden DAB-System zur zwei dimensionalen differentiellen Demodulation im Empfänger, wobei die Größe des OFDM-Rahmens auf die im DAB-Standard festgelegte Rahmengröße angepaßt ist.

Das Verfahren nach der Erfindung wird im folgenden anhand von Zeichnungen erläutert. Es zeigen:

Fig.1     das bereits beschriebene Schema einer bekannten eindimensionalen differentiellen Demodulation innerhalb eines OFDM-Rahmens in Zeitrichtung,

Fig.2a in einem Funktionsblockschaltbild die bekannte eindimensionale differentielle Modulation in Zeit- oder Frequenzrichtung,

Fig.2b in einem Funktionsblockschaltbild die herkömmliche eindimensionale Demodulation in Zeit- oder Frequenzrichtung,

Fig.2c in einem Funktionsblockschaltbild die differentielle Demodulation mit zwei beliebigen empfangenen Symbolen,

Fig.3 in einem Symbolschema die beim Verfahren nach der Erfindung möglichen Richtungen bei der zweidimensionalen differentiellen Demodulation in Zeit und Frequenz.

Fig.4 eine Darstellung der Pfade mit einer Iterationstiefe bis $N = 3$ bei Verwendung eines Bezugssymbols in vertikaler Richtung, und

Fig.5 mögliche Pfade mit 1, 2, 3 und 4 Iterationen und dementsprechend 0, 1, 2 bzw. 3 Zwischenschritten.

Im folgenden wird von einem Übertragungsverfahren ausgegangen, das eine Mehrträgermodulation (OFDM) verwendet. Die Information der einzelnen Träger ist dabei in einem sogenannten OFDM-Symbol enthalten. Zeitlich aufeinanderfolgend werden mehrere dieser OFDM-Symbole zu einer Rahmenstruktur wählbarer Länge zusammengefügt, wie bereits anhand der Fig.1 beschrieben worden ist. Im Grenzfall kann die Länge der Rahmenstruktur auch unendlich sein. Allgemein kann das Verfahren auf beliebige ein- und mehrdimensionale Strukturen angewendet werden.

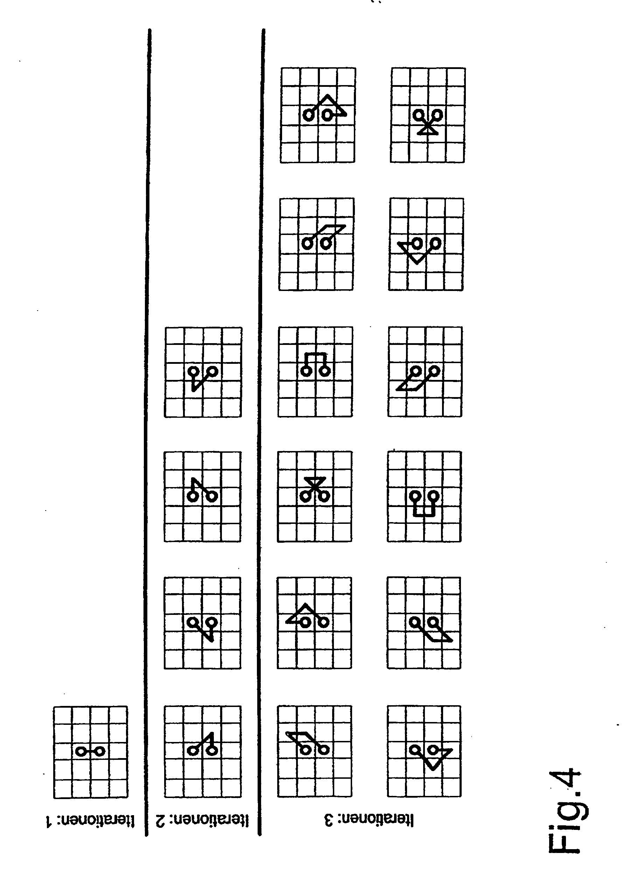

Wie die Fig.3 anhand eines Empfangssymbolschemas zeigt, wird beim Verfahren nach der Erfindung zur differentiellen Demodulation nicht nur eine Richtung, also in diesem Fall Zeit t oder Frequenz f, verwendet, sondern es werden dazu beide Richtungen, also Zeit t und Frequenz f, eingesetzt. Dieses Verfahren wird im folgenden als zweidimensionale differentielle Demodulation bezeichnet.

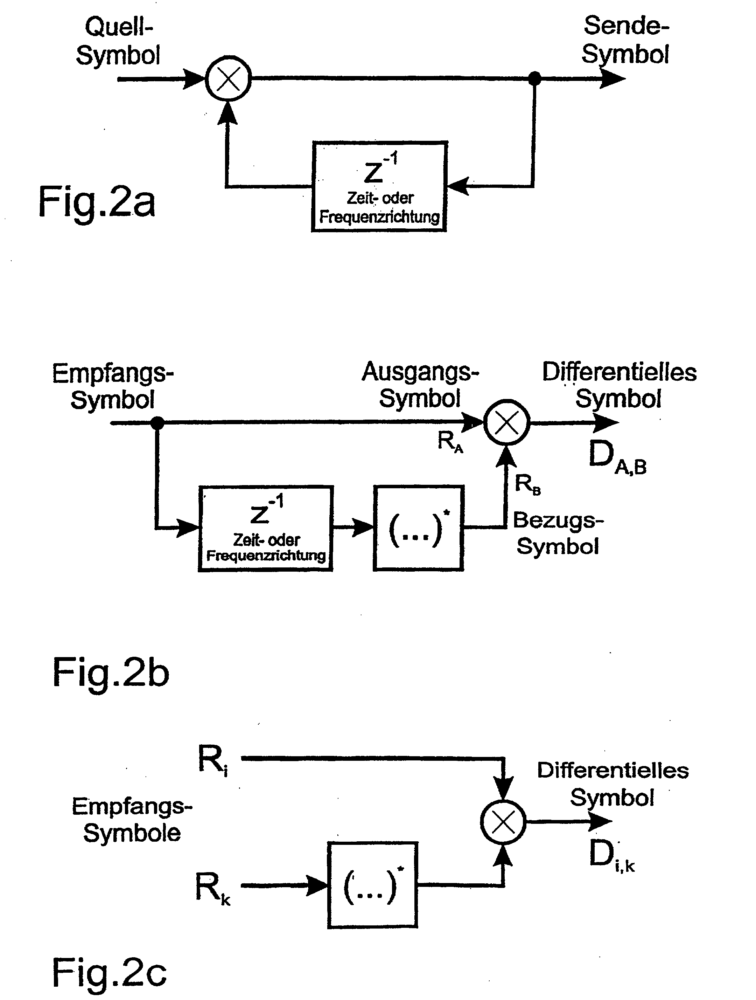

Hierbei kann die Modulation im Sender nach wie vor in eindimensionaler Richtung, beispielsweise in der Richtung der Zeit oder in der Richtung der Frequenz, erfolgen, was in Fig.2a in einem Blockschaltbild dargestellt wird. Am Sender sind nicht notwendigerweise Änderungen erforderlich.

Das Verfahren beruht darauf, daß jedes verwendete gesendete Symbol aus dem gleichen Symbolalphabet stammt und zu jedem Zeitpunkt jedes beliebige Symbol aus diesem Alphabet als Sendesymbol möglich sein muß. Unter einem gesendeten Symbol ist ein Symbol zu verstehen, das nach der differentiellen Modulation entsteht. Durch diese Voraussetzung gilt, daß die differentielle Demodulation zwischen zwei beliebigen gesendeten Symbolen wieder ein gültiges Quellsymbol ergibt', das zwar direkt keine Information enthält, jedoch zur Entscheidungsfindung bei der Demodulation beitragen kann, wozu auf die Fig.2c hingewiesen wird, die eine differentielle Demodulation mit zwei beliebigen empfangenen Symbolen zeigt und später noch näher beschrieben wird. Unter einem Quellsymbol ist dabei ein Symbol zu verstehen, das für die differentielle Modulation verwendet wird bzw. nach der differentiellen Demodulation wieder zurückgewonnen wird.

Wie vorstehend ausgeführt wurde, kann die differentielle Demodulation prinzipiell zwischen zwei beliebigen Symbolen durchgeführt werden, vgl. dazu die Fig.2c. Wegen der stärkeren statistischen Abhängigkeit wird hier die differentielle Demodulation in jedem Schritt mit den jeweils acht benachbarten empfangenen Symbolen in der zweidimensionalen Zeit-Frequenz-Ebene durchgeführt, wie in der Fig.3 dargestellt ist. Eine der acht Möglichkeiten im ersten Schritt stellt die Richtung der ursprünglichen eindimensionalen differentiellen Demodulation zum Bezugssymbol dar. Diese Demodulationsrichtung ist durch die Richtung der sendeseitig ausgeführten Modulation vorgegeben. Die weiteren sieben in Fig.3 dargestellten Möglichkeiten führen nicht direkt zum Bezugssymbol und erfordern deshalb weitere differentielle Iterationsschritte.

Beim iterativen Demodulationsverfahren wird versucht, mit Hilfe eines festgelegten Kriteriums einen Demodulationspfad im Rahmen zu finden, der zwar länger als der gewöhnliche eindimensionale Pfad ist, aber laut einem festgelegten Kriterium zuverlässiger ist. Befindet man sich am Rand eines Rahmens, so verringert sich die Anzahl der möglichen Pfadrichtungen. In der Fig.4 sind alle möglichen Pfade für die Iterationstiefen 1 2 und 3 aufgeführt, die zum gewünschten Bezugssymbol führen, wobei eine höhere Iterationsstufe die Pfade der niedrigeren Iterationsstufe(n) jeweils mit einschließt. Jedes empfangene komplexe Symbol $R_i$ läßt sich folgendermaßen darstellen:

$$R_i = a_i \cdot e^{j\varphi_1}, \qquad (1)$$

wobei $a_i$ die Amplitude und $\varphi_i$ die Phase des empfangenen Symbols ist. Das Ausgangssymbol des ursprünglichen eindimensionalen differentiellen Demodulationsschrittes wird als $R_A$ und das Bezugssymbol als $R_B$ bezeichnet, siehe dazu Fig.2b. Die differentielle Demodulation wird wie folgt durchgeführt, siehe dazu die Fig.2c:

$$D_{i,k} = R_i \cdot R_k^* = a_i \cdot a_k \cdot e^{j(\varphi_i - \varphi_k)}, \qquad (2)$$

wobei $D_{i,k}$ das empfangene Symbol nach der differentiellen Demodulation und $(...)^*$ der konjugiert komplexe Ausdruck ist. In dem hier aufgeführten Fall ist die Information in der differentiellen Phase

$$\Delta\varphi_{i,k} = \varphi_i - \varphi_k \qquad (3)$$

enthalten. Somit ergibt sich für die informationstragende differentielle Phase bei der ursprünglichen eindimensionalen differentiellen Demodulation:

$$\Delta\varphi_{A,B} = \varphi_A - \varphi_B \qquad (4)$$

Je nach gewähltem Modulationsverfahren wird aus der differentiellen Phase $\Delta\varphi_{A,B}$ auf das gesendete Quellsymbol geschlossen.

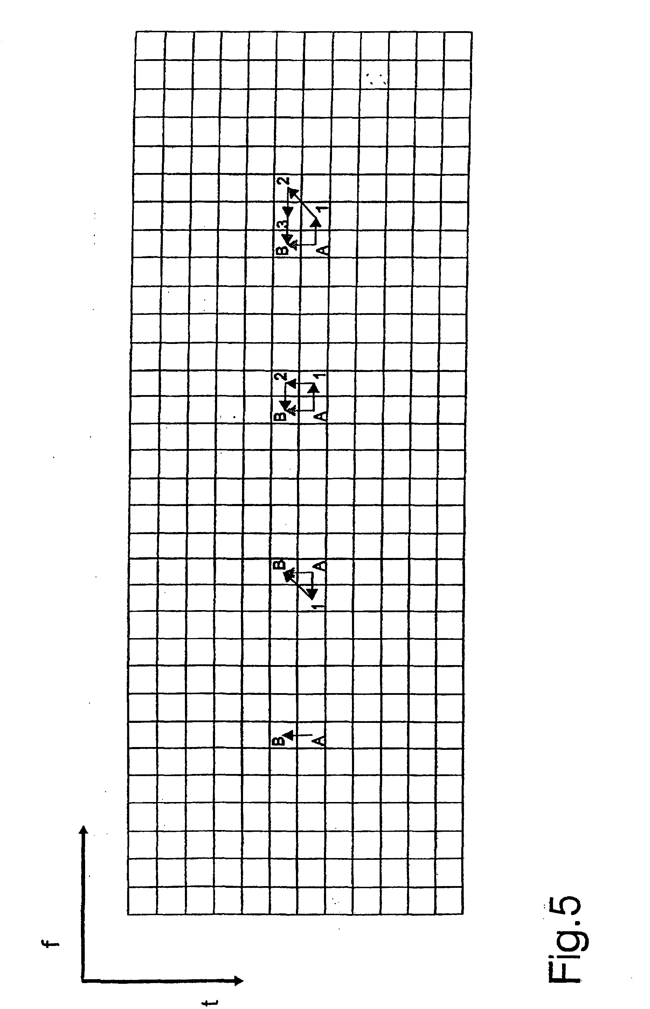

Wird nun anstelle des direkten Pfades ein Pfad mit mehreren Iterationsschritten verwendet, so ergeben sich differentielle Zwischenphasen $\Delta\varphi_{A,1}$, $\Delta\varphi_{1,2},...,\Delta\varphi_{N-1,B}$ für jeden Iterationsschritt, wobei N die Iterationstiefe bezeichnet ($N \geq 2$), siehe dazu die Fig.5. Würden diese differentiellen Zwischenphasen aufsummiert werden, so ergäbe sich

$$\varphi_{A,1} + \sum_{i=1}^{N-2}\varphi_{i,i+1}\bigg|_{N>2} + \varphi_{N-1,B} = (\varphi_A - \varphi_1) + (\varphi_1 - \varphi_2) + ... + (\varphi_{N-1} - \varphi_B) = (\varphi_A - \varphi_B) = \Delta\varphi_{A,B}, \quad (5)$$

d.h. die Phasendifferenz $\Delta\varphi_{A,B}$ bleibt unverändert. Durch ein reines Zusammenzählen der Zwischenphasen wäre somit kein Gewinn erzielbar, aber die Phase des ursprünglichen Pfades $A{\rightarrow}B$ würde dadurch auch nicht beeinflußt werden.

Es bietet sich nun jedoch die Möglichkeit, diese differentiellen Zwischenphasen einzeln zu betrachten, da sie, wie vorher bereits erwähnt worden ist, auch jeweils ein gültiges Quellsymbol darstellen. Jede empfangene differentielle Phase kann in eine gültige Phase $\varphi_{Quelle\ i,k}$, die der am nächsten gelegenen, aber nicht unbedingt korrekten Phase des Quellalphabets entspricht, und einen Phasenfehler $\varphi_{Fehler\ i,k}$ aufgeteilt werden, der einem Offset zu dieser Quellalphabetsphase entspricht:

$$\Delta\varphi_{i,k} = \varphi_{Quelle\ i,\ k} + \varphi_{Fehler\ i,k}. \qquad (6)$$

Bei der ursprünglichen eindimensionalen differentiellen Demodulation wird mit Hilfe der differentiellen Phase $\Delta\varphi_{A,B}$ direkt auf die Phase des Quellsymbols $\varphi_{Quelle\ A,B}$ geschlossen.

Bei der hier vorgestellten und gemäß der Erfindung arbeitenden zweidimensionalen differentiellen Demodulation wird im Gegensatz dazu für jede Zwischenphase $\Delta\varphi_{A,1}$, $\Delta\varphi_{1,2},...,\Delta\varphi_{N-1,B}$ eine entsprechende Entscheidung über eine mögliche Phase des Quellalphabets $\varphi_{Quelle\ A,1}$, $\varphi_{Quelle\ 1,2},..., \varphi_{Quelle\ N-1,B}$ getroffen. Des weiteren bietet sich die Möglichkeit, die Phasenfehler $\varphi_{Fehler\ A,1}$, $\varphi_{Fehler\ 1,2},...,\varphi_{Fehler\ N-1,B}$ und/oder die Amplituden $a_A a_1$, $a_1 a_2,...,a_{(N-1)}a_B$ für das Pfadkriterium und der sich daraus ergebenden Beurteilung zu speichern.

Bei der Entscheidung über ein mögliches Symbol des Quellalphabets kann nicht sichergestellt werden, ob die korrekte Entscheidung für das tatsächlich zutreffende Symbol des Quellalphabets getroffen wurde. Aus diesem Grund muß mit Hilfe des gewählten Kriteriums sichergestellt werden, daß trotz der Tatsache, daß ein Pfad mit Zwischenstufen länger als der ursprüngliche direkte Pfad ist, die Entscheidung über die einzelnen Zwischensymbole zuverlässiger ist. Die Suche nach dem zuverlässigsten Pfad kann hierbei, wie bereits vorher erwähnt wurde, in iterativer Weise erfolgen.

Dabei wird zunächst angenommen, daß der direkte Pfad der zuverlässigste Pfad ist und deshalb als Referenzpfad dient (Iterationstiefe $N$ = 1). Je nach Iterationstiefe $N$ werden nun alle oder eine Untergruppe der möglichen Pfade mit maximaler Länge $N$ untersucht und festgestellt, ob sie laut dem festgelegten Kriterium zuverlässiger als der Referenzpfad sind. Ist dies der Fall, so wird der gerade untersuchte Pfad zum neuen Referenzpfad. Die Pfadsuche wird solange durchgeführt, bis alle Pfade bis zur maximalen Iterationstiefe, die das Ziel, nämlich das Bezugssymbol erreichen, untersucht wurden. Der laut Kriterium beste Pfad hat somit eine Pfadlänge L mit $1 \leq L \leq N$. Für die endgültige Entscheidung wird nun die differentielle Gesamtphase $\Delta\varphi'_{A,B}$ folgendermaßen ermittelt:

$$\Delta\varphi'_{A,B} = \begin{cases} \varphi_{Quelle\ A,B} & \text{für } L = 1 \\ \varphi_{Quelle\ A,1} + \varphi_{Quelle\ 1,B} & \text{für } L = 2 \quad (7) \\ \varphi_{Quelle\ A,1} + \sum_{i=1}^{L-2} \varphi_{Quelle\ i,i+1} + \varphi_{Quelle\ (L-1),B} & \text{sonst} \end{cases}$$

Diese Phase kann nun direkt einem gültigen Quellsymbol zugeordnet werden, und es kann eine Entscheidung über die darin enthaltene Information gefällt werden.

Nachfolgend wird noch ein Ausführungsbeispiel für das Verfahren einer zweidimensionalen differentiellen Demodulation nach der Erfindung beschrieben.

In diesem Ausführungsbeispiel wird ein OFDM-Rahmen mit 128 Unterträgern und 24 OFDM-Symbolen betrachtet. Die differentielle Modulation erfolgt auf jedem Unterträger in Zeitrichtung. Das erste OFDM-Symbol zu Beginn eines OFDM-Rahmens dient als Referenzsymbol für den ersten differentiellen Schritt. Als Modulationsart dient die DQPSK(Differential Quaternary Phase Shift Keying)-Modulation.

Als Entscheidungsgröße für das Kriterium des optimalen Pfades wird nur der Phasenfehler $\varphi_{Fehler\ i,k}$ der einzelnen Schritte verwendet. Zu Beginn wird der Betrag des Phasenfehlers $\varphi_{Fehler\ A,B}$ des direkten Pfades ermittelt. Er dient zunächst als Referenzwert. Nun werden alle Pfade bis zur maximalen Iterationslänge, die zum Bezugssymbol führen, untersucht. Für jeden Zwischenschritt des gerade zu untersuchenden Alternativpfades wird der Phasenfehler $\varphi_{Fehler\ i,k}$ ermittelt. Sollte einer dieser Phasenfehler betragsmäßig größer als der Referenzwert sein, so wird dieser Alternativpfad verworfen. Sind jedoch alle Phasenfehler im Alternativpfad kleiner als der Referenzwert, so wird der maximale Phasenfehler hieraus zum neuen Referenzwert und der untersuchte Pfad zum neuen optimalen Pfad. Wurden alle möglichen Pfadalternativen untersucht, so wird die differentielle Gesamtphase $\Delta\varphi'_{A,B}$ des optimalen Pfades als Entscheidungsgröße für das differentiell zu demodulierende Symbol verwendet.

Im OFDM-Rahmen steht zum Schluß für jedes differentiell zu demodulierende Symbol ein optimaler Pfad zur Entscheidungsfindung zur Verfügung.

Mit dem Kriterium dieses Ausfuhrungsbeispiels wird z.B. im AWGN(Additive White Gaussian Noise)-Kanal bereits mit einer Iterationslänge von $N$ = 2 eine Verringerung des zum Erreichen der Bitfehlerwahrscheinlichkeit von $P_b$ = $10^{-4}$ benötigten Signal-Störverhältnisses $E_b/N_0$ um mehr als 1 dB im Vergleich zur herkömmlichen eindimensionalen differentiellen Demodulation erzielt. Der entsprechende Abstand im Signal-Störverhältnis $E_b/N_0$ zum vergleichbaren kohärenten QPSK(Differential Quaternary Phase Shift Keying)-Modulationsverfahren mit perfekter pilotsymbolgestützter Kanalschätzung, die in der Praxis allerdings nicht realisierbar ist, verringert sich damit auf etwa 1 dB. Größere Iterationstiefen bringen eine weitere Verringerung des benötigten Signal-Störverhältnisses $E_b/N_0$.

Das vorstehend beschriebene Ausführungsbeispiel läßt sich beispielsweise beim bestehenden DAB(Digital Audio Broadcasting)-System zur zwei dimensionalen differentiellen Demodulation im Empfänger einsetzen. Hierzu ist es lediglich erforderlich, die Größe des OFDM-Rahmens auf die im DAB-Standard festgelegte Rahmengröße anzupassen.

**Patentansprüche**

**1.** Verfahren zur empfangsseitig in zwei Dimensionen, nämlich in Zeit- und Frequenzrichtung, durchgeführten differentiellen Demodulation der Phase der empfangenen Symbole von digital in Form einer differentiellen Phasenmodulation in einem mit dem OFDM-Mehrtägerverfahren arbeitenden Übertragungssystem übertragenen Signalen, **dadurch gekennzeichnet, dass** die differentielle Demodulation der Phase der empfangenen OFDM-Symbole in jedem Schritt mit jeweils acht richtungsmäßig benachbarten empfangenen Symbolen durchgeführt wird, wobei sich die Anzahl der richtungsmäßig benachbarten Symbole dann verringert, wenn sich das Ausgangssymbol am Rande eines OFDM-Rahmens befindet, in dem zeitlich aufeinanderfolgend mehrere OFDM-Symbole zusammengefügt sind, dass im ersten Schritt die Demodulationsrichtung der Richtung der ursprünglichen eindimensionalen differentiellen Demodulation des Ausgangssymbols zum Bezugssymbol entspricht und die weiteren sieben Richtungsmöglichkeiten nicht direkt, sondern über einen oder mehrere weitere Iterationsschritte zum Bezugssymbole führen, dass mit Hilfe eines festgelegten Kriteriums im OFDM-Rahmen ein Demodulationspfad gesucht und gefunden wird, der zwar länger als ein eindimensionaler Pfad ist, aber laut dem Kriterium zuverlässiger ist, und dass als Entscheidungsgröße für das Kriterium des optimalen Pfades der Phasenfehler der einzelnen Schritte verwendet wird, wobei zu Beginn der Betrag des Phasenfehlers des direkten Pfades ermittelt wird, der als Referenzwert dient, dass danach alle Pfade bis zur maximalen Iterationslänge, die zum Bezugssymbol führen, untersucht werden und für jeden Zwischenschritt des gerade zu untersuchenden Alternativpfades der Phasenfehler ermittelt wird, dass dann, wenn einer dieser Phasenfehler betragsmäßig größer als der Referenzwert ist, dieser Alternativpfad verworfen wird, dass jedoch dann, wenn alle Phasenfehler im Alternativpfad kleiner als der Referenzwert sind, der maximale Phasenfehler hieraus zum neuen Referenzwert und der untersuchte Pfad zum neuen optimalen Pfad wird, dass nach Untersuchung aller möglichen Pfade die differentielle Gesamtphase des optimalen Pfades als Entscheidungsgröße für das differentiell zu demodulierende Symbol verwendet wird und dass auf diese Weise im OFDM-Rahmen zum Schluß für jedes differentiell zu demodulierende Symbol ein optimaler Pfad zur Entscheidungsfindung zur Verfügung gestellt wird.

2. Verfahren nach Anspruch 1, **dadurch gekennzeichnet, dass** als differentielle Modulationsart die DQPSK-Modulation verwendet wird.

3. Verfahren nach Anspruch 1 oder 2, **gekennzeichnet durch** eine Anwendung zur zweidimensionalen differentiellen Demodulation in Empfängern für bereits existierende digitale Übertragungssysteme mit eindimensionaler differentieller Modulation der Phase in Zeit- oder Frequenzrichtung.

4. Verfahren nach Anspruch 2 und 3, **gekennzeichnet durch** die Verwendung beim bestehenden DAB-System zur zweidimensionalen differentiellen Demodulation im Empfänger, wobei die Größe des OFDM-Rahmens auf die im DAB-Standard festgelegte Rahmengröße angepaßt ist.

**Claims**

1. A method of differential demodulation of the phase of received symbols of signals communicated digitally in the form of a differential phase modulation in an OFDM multicarrier communications system as implemented at the receiving end in two dimensions, namely in the time and frequency direction, **characterized by** implementing the differential demodulation of the phase of the received OFDM symbols in each step with eight directionally juxtaposed received symbols in each case, the number of the directionally juxtaposed received symbols being reduced when the starting symbol is located at the edge of an OFDM frame in which several OFDM symbols are grouped together in a time sequence, whereby in the first step the demodulation direction corresponds to the direction of the original one-dimensional differential demodulation of the starting symbol to the reference symbol and the further seven directional options resulting in the reference symbol not directly but via one or more further steps in iteration, searching and finding with the aid of a defined criterion in the OFDM frame a demodulation path which although longer than a one-dimensional path is more reliable in accordance with the criterion in making use of the phase error of each step as the decisive parameter for the criterion of the optimum path, by firstly establishing the amount of the phase error of the demodulation path serving as the reference value and then testing all paths up to the maximum iteration length leading to the reference symbol and establishing the phase error for each intermediate step of the alternative path being tested at the time, discarding this alternative path when the amount of one of these phase errors exceeds that of the reference value, but when all phase errors in the alternative path are smaller than the reference value, making the tested path the new optimum path, using, following testing of all path options, the differential overall phase of the optimum path as the decisive parameter for the symbol to be differentially demodulated, for then ultimately making available an optimum path for decision finding in the OFDM frame for each symbol to be differentially demodulated.

2. The method as set forth in claim 1, **characterized in that** DQPSK modulation is used as the mode of differential modulation.

3. The method as set forth in claim 1 or 2, **characterized by** an application for two-dimensional differential demodulation in receivers for already existing digital communication systems with one-dimensional differential modulation of the phase in the time or frequency direction.

4. The method as set forth in claim 2 and 3, **characterized by** use in the existing DAB system for two-dimensional differential demodulation in the receiver in adapting the size of the OFDM frame to the frame size as defined in the DAB standard.

**Revendications**

1. Procédé de démodulation différentielle. exécuté côté réception dans deux dimensions, à savoir dans la direction du temps et dans là direction des fréquences, de la phase des symboles reçus de signaux transmis numériquement sous la forme d'une modulation de phase différentielle dans un système de transmission travaillant avec le procédé à porteuses multiples OFDM, **caractérisé en ce que** la démodulation différentielle de la phase des symboles OFDM reçus est exécutée lors de chaque phase, avec respectivement huit symboles reçus voisins du point de vue direction, selon lequel le nombre des symboles voisins du point de vue direction diminue lorsque le symbole de sortie est situé au bord d'une trame OFDM, dans laquelle plusieurs symboles OFDM sont réunis successivement dans le temps, **en ce que** lors de la première étape, la direction de démodulation correspond à la direction de la démodulation différentielle unidimensionnelle originale du symbole de sortie par rapport au symbole de référence et les sept autres possibilités de direction conduisent d'une manière non directe, mais au moyen d'un ou de plusieurs autres pas d'itération au symbole de référence, **en ce qu'**on recherche et on trouve, à l'aide d'un critère fixé dans la trame OFDM, un trajet de démodulation qui est plus long que le trajet unidimensionnel, mais est plus fiable conformément au critère, et **en ce qu'**on utilise comme grandeur de décision pour le critère du trajet optimum l'erreur de phase des différentes étapes, la valeur absolue de l'erreur de phase du trajet direct, qui sert de valeur de référence, étant déterminée au départ, **en ce qu'**ensuite on examine tous les trajets jusqu'à la longueur d'itération maximale, qui conduisent au symbole de référence, et on détermine l'erreur de phase pour chaque étape intermédiaire du trajet alternatif devant être précisément examiné, **en ce qu'**ensuite, lorsque l'une de ces erreurs de phase possède une valeur absolue supérieure à la valeur de référence, ce trajet alternatif est éliminé, **en ce que**, toutefois, lorsque toutes les erreurs de phase dans le trajet alternatif sont inférieures à la valeur de référence, l'erreur de phase maximale à partir de ces erreurs de phase devient la nouvelle valeur de référence et le trajet examiné devient le nouveau trajet optimum, **en ce qu'**après l'examen de tous les trajets possibles, la phase totale différentielle du trajet optimum est utilisée en tant que grandeur de décision pour le symbole devant être démodulé de façon différentielle et **en ce que** de cette manière un trajet optimum pour la prise de décision est mis finalement à disposition dans la trame OFDM pour chaque symbole devant être démodulé de façon différentielle.

2. Procédé selon la revendication 1, **caractérisé en ce qu'**on utilise comme type de modulation différentielle la modulation DQPSK.

3. Procédé selon la revendication 1 ou 2, **caractérisé par** une utilisation, pour la démodulation différentielle bidimensionnelle, dans des récepteurs pour des systèmes de transmission numériques usuels existants avec une modulation différentielle unidimensionnelle de la phase dans la direction temporelle et dans la direction des' fréquences.

4. Procédé selon les revendications 2 et 3, **caractérisé par** son utilisation dans le système DAB existant pour la démodulation différentielle bidimensionnelle dans le récepteur, la grandeur de la trame OFDM étant adaptée à la grandeur de trame fixée dans la norme DAB.

Fig.1

Fig.3

Quell-
Symbol

Sende-
Symbol

$Z^{-1}$

Zeit- oder
Frequenzrichtung

Fig.2a

Empfangs-
Symbol

Ausgangs-
Symbol

Differentielles
Symbol

$R_A$

$D_{A,B}$

$R_B$

$Z^{-1}$

Zeit- oder
Frequenzrichtung

$(...)^*$

Bezugs-
Symbol

Fig.2b

$R_i$

Differentielles
Symbol

Empfangs-
Symbole

$R_k$

$(...)^*$

$D_{i,k}$

Fig.2c

10

Fig.4

Fig.5